(19)

**Europäisches Patentamt**

**European Patent Office**

**Office européen des brevets**

(11)　**EP 3 029 606 A2**

(12)　**EUROPEAN PATENT APPLICATION**

(43) Date of publication:
08.06.2016　Bulletin 2016/23

(51) Int Cl.:
*G06K 9/46* (2006.01)　*G06K 9/62* (2006.01)

(21) Application number: **15183185.6**

(22) Date of filing: **31.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 14.11.2014　EP 14306816
05.05.2015　EP 15305684

(71) Applicant: **Thomson Licensing**
**92130 Issy-les-Moulineaux (FR)**

(72) Inventors:
• **KULKARNI, Praveen Anil**
**35576 Cesson-Sevigne (FR)**
• **ZEPEDA SALVATIERRA, Joaquin**
**35576 Cesson-Sevigne (FR)**
• **JURIE, Frédéric**
**14000 Caen (FR)**

(74) Representative: **Huchet, Anne**
**Technicolor**
**1, rue Jeanne d'Arc**
**92443 Issy-les-Moulineaux Cedex (FR)**

(54)　**METHOD AND APPARATUS FOR IMAGE CLASSIFICATION WITH JOINT FEATURE ADAPTATION AND CLASSIFIER LEARNING**

(57)　A technique for improving the performance of image classification systems is proposed which consists of learning an adaptation architecture on top of the input features jointly with linear classifiers, e.g., SVM. This adaptation method is agnostic to the type of input feature and applies either to features built using aggregators, e.g., BoW, FV, or to features obtained from the activations or outputs from DCNN layers. The adaptation architecture may be single (shallow) or multi-layered (deep). This technique achieves a higher performance compared to current state of the art classification systems.

Figure 8

**Description**

TECHNICAL FIELD

The present principles relate to image classification systems.

BACKGROUND

In the era of Big Data, image classification systems have become an area of increased interest, with application in many real world scenarios. Provided an image as an input to an image classification system, the task of the system is to identify the visual concept present in the image. For example, in landscape assessment or planning, one needs to classify landscape images into classes such as forest, water or agriculture. Since the number of landscape images in a database might be very large, it becomes difficult for a user to mine the required relevant images manually from a database for assessment. In such cases, it is desirable to have an automated image classification system which can perform the task of retrieving the relevant images, based on the user query. Similar applications are the identification of forest fires or analysis of images from other planets to identify geographical points of interest. In supermarket and grocery store applications, wherein a supermarket assistant is serving the customers for pricing the items list, an image classification system can be used to identify the items automatically based on the visual content of an image and then price them accordingly.

In traffic assessment and planning, one can estimate the density of traffic using images from cameras mounted on lamp posts near the road side. In this scenario images containing a large number of vehicles can be visually differentiated from images containing a smaller number of vehicles. The image classification system can be trained to identify the vehicular density based on visual content in an image. This information can be used by the Global Positioning System (GPS) to suggest the optimal route for the user. One more application can be found in the retrieval of relevant images from large collections of private photos stored in a personal computer as in Google Plus. When users enable the option of synchronizing Google Plus with private albums in their personal computer, they can automatically retrieve relevant photos based on their respective queries. For example, if a user is interested in viewing the images containing "family" photos from his private collections, image classification can be used to perform such task by just taking the user query in text form ("family") and retrieving the relevant images of "family" photos from the private collections. Other applications include object recognition (face, fingerprint, eye or iris, document, text, etc.), computer graphics, online image search tools, artificial intelligence and robotics, where a machine must search and recognize countless objects in order to perform a task or to navigate, etc.

The classical image feature extraction pipeline consists of three major steps: 1) Extracting local descriptors such as Scale-Invariant Feature Transform (SIFT) from the image; 2) mapping these descriptors to a higher dimensional space; 3) and sum or max-pooling the resulting vectors to form a fixed-dimensional image feature representation. Examples of methods corresponding to this classical approach include Bag-of-Words (BoW), Fisher Vector (FV), Locality-Constrained Linear Encoding, Kernel codebooks, Super-Vector Encoding and Vector of Aggregated Local Descriptors (VLAD). We refer to these types of image feature extraction schemes as aggregators given that they aggregate local descriptors into a fixed dimensional representation. Generally, these approaches require computationally inexpensive unsupervised models of the local descriptor distribution, and the resulting image features can be used to learn (or train) likewise inexpensive linear classifiers using SVMs (Support Vector Machine).

The novel Deep Convolution Neural Networks (DCNN) pipeline has drastically pushed the performance limits of image classification, and extensions of the same approach have further improved performance. DCNNs consist of multiple interconnected layers including spatial convolution layers, half-wave rectification layers, spatial pooling layers, normalization layers, and fully connected layers. While this method attains outstanding classification performance, it also suffers from large testing complexity, particularly due to the first fully connected layer, as well as large training complexity, since all the coefficients in the pipeline are learned/trained in a supervised manner and require lots of training images. To address this latter issue, a recent technique proposed to use DCNN models pre-trained on the Imagenet dataset (image database consisting of many millions of images) and then transfer all but the last layer of this pre-trained DCNN to a new target dataset, where two new adaptation layers are trained. This reduces training time and the amount of required training data, but the training data needs to be annotated with bounding box information (i.e., the smallest upright rectangle which entirely encloses the figures on a page). The fact that the method works on a per-patch basis further increases the testing complexity relative to standard DCNNs.

Several other approaches exist which attempt to bridge the classical approach and the DCNN approach using hybrid mixes. Inspired by the popularity of DCNNs, one approach proposed to incorporate the deep aspect of DCNNs into traditional SIFT/FV schemes by stacking multiple layers of FV aggregators, with each layer operating on successively coarser overlapping spatial cells. Another approach instead proposed viewing the standard FV aggregator as a deep architecture, substituting the unsupervised Gaussian Mixture Model (GMM) parameters of the FV aggregator by supervised versions.

A recently proposed method combines the advantages of both approaches (DCNNs and classical aggregators) using hybrid mixes of both pipelines. The approach consists of treating the output of the pre-trained intermediate layers of the DCNN architecture as local image descriptors that are aggregated using standard aggregators such as BoW or FV. The last layer of DCNN is a soft-max classifier instead of a simpler SVM classifier. A related approach instead uses the output of the previous-to-last fully connected layer as a local descriptor, computing this descriptor on multi-scale dense patches subsequently aggregated using VLAD on a per-scale basis. This related approach is very complex because one needs to compute the full DCNN pipeline not only on the original image but also on a large number of multi-scale patches and further apply two levels of Principle Component Analysis (PCA) dimensionality reduction. Another related approach uses spatial-pyramid-pooling as a dimensionality adaptation method to match variable-size activations from convolutional layers (when using arbitrarily-sized images), to the fixed input dimension of the fully-connected layers. It trains its architecture on the ImageNet ILSVRC dataset, and transfers it to new datasets by learning/training an SVM classifier on the activations of the previous-to-last layer.

Whether BoW, FV or DCNN, these methods are used to obtain a feature vector representation of images which are then used to train the classifiers, *e.g.*, SVM. For SVM, this implies minimizing the loss function of the SVM objective function. However, one issue that arises with this strategy is that the feature vector representation obtained from any of these methods may not be the best feature for the SVM classifiers.

It is, therefore, of interest to propose image classification systems which further improve the feature vector representation of images, jointly taking the desired feature vectors and classifiers into consideration. The present principles provide such an improved system.

SUMMARY

The present principles provide a technique for improving the performance of image classification systems when applied to any of the known methods such as DCNN, FV, BoW, among others, by learning an adaptation architecture on top of the input features jointly with linear classifiers.

According to one aspect of the present principles, a method of generating feature-adapted image classifiers for classifying images is provided, the method including: accessing a plurality of training images: generating feature vectors for the training images; transforming the feature vectors with an input transform; generating the feature-adapted image classifiers and a feature-adapted transform as a function of the transformed feature vectors and input image classifiers by jointly training said input image classifiers with the transformed feature vectors; and providing the feature-adapted image classifiers and the feature-adapted transform.

According to one aspect of the present principles, an apparatus for generating feature-adapted image classifiers for classifying images is provided, the apparatus including a processor, for receiving at least one input/output; and at least one memory in signal communication with the processor, the processor being configured to: access a plurality of training images; generate feature vectors for the training images; transform the feature vectors with an input transform; generate the feature-adapted image classifiers and a feature-adapted transform as a function of the transformed feature vectors by jointly training said input image classifiers with the transformed feature vectors; and provide the feature-adapted image classifiers and a feature-adapted transform.

According to one aspect of the present principles, a method of image classification is provided, the method including: generating or accessing a feature vector for an image; accessing feature-adapted image classifiers and a feature-adapted transform previously generated according to the present principles; transforming the feature vector by the feature-adapted transform; and classifying the transformed feature vector with the feature-adapted image classifiers to obtain the image classification.

According to one aspect of the present principles, an apparatus for image classification is provided, the apparatus including a processor, for receiving at least one input/output; and at least one memory in signal communication with the processor, the processor being configured to: generate or access a feature vector for an image; access feature-adapted image classifiers and a feature-adapted transform previously generated according to the present principles; transform the feature vector by the feature-adapted transform; and classify the transformed feature vector with the feature-adapted image classifiers to obtain the image classification.

Additional features and advantages of the present principles will be made apparent from the following detailed description of illustrative embodiments which proceeds with reference to the accompanying figures.

BRIEF DESCRIPTION OF THE DRAWINGS

The present principles may be better understood in accordance with the following exemplary figures briefly described below:

Figure 1 illustrates a simplified block diagram of a standard image classification system;

Figure 2 illustrates the Architecture of a Deep-CNN pipeline trained on ImageNet 2012;

Figure 3 illustrates a simplified block diagram of deep (2-layer) adaptation of a single layer transferred DCNNs according to the present principles;

Figure 4 illustrates a simplified block diagram of deep (2-layer) adaptation of each layer in transferred DCNNs according to the present principles

Figure 5 illustrates a plot of the average precision for the "aeroplane" class of the Pascal VOC 2007 dataset for an exemplary classification system according to the present principles.

Figure 6 illustrates a table with average precision comparison results for an exemplary image classification system according to the present principles (Feature-Adapted Image Classification - FAIC), the DCNN system, a BoW based system and an FV based system.

Figure 7 illustrates a flowchart of a method of generating feature-adapted image classifiers for classifying images according to the present principles; and

Figure 8 illustrates a flowchart of a method of image classification according to the present principles; and

Figure 9 illustrates a block diagram of a computing environment within which the present principles may be implemented and executed.

## DETAILED DISCUSSION OF THE EMBODIMENTS

The present principles relate to image classification and provide a technique for improving the performance of image classification systems by carrying out feature adaptation which can be applied to arbitrary input features (such as DCNN activations, FV, or BoW, among others) and which are learned/trained jointly with the classifiers. The adaptation architecture may be single (shallow) or multi-layered (deep). More than two adaptation layers may be considered, and training complexity issues may be overcome by using low-rank linear (i.e., rectangular-fat) matrices for the **($M^j$)** transform operators in each layer, rather than drastically increasing the training set size (and ensuing training complexity) using bounding box annotations as in the prior art. This also has the additional benefit of regularizing the problem, making it possible to learn over small datasets. The technique consists of learning an adaptation pipeline on top of the input features, and using the activations at the output of the last (or only) layer of the deep (or shallow) adaptation architecture as a feature over which the classifiers (e.g., SVM) are learned. However, learning/training the classifiers is performed jointly with the adaptation architecture, which is a novel approach, rather than transferring the architecture learned from another dataset, as done in the prior art.

Other than the inventive concept, several elements hereby discussed are well known and will not be described in detail. For example, other than the inventive concept, familiarity with standard classification systems, SIFT, BoW, FV, VLAD, SVM, CNN/DCNN, GMM, PCA, ReLU is assumed and not described herein in detail. It should also be noted that the inventive concept may be implemented using conventional programming techniques, which, as such, will not be described herein.

In the following, the notation regarding scalars, vectors and matrices uses, respectively standard, bold, and uppercase-bold typeface (e.g., scalar *a*, vector **a**, and matrix **A**). The symbol $v_k$ denotes a vector from a sequence $v_1$, $v_2$,..., $v_N$, and $v_k$ denotes the *k*-th coefficient of vector v. The symbol $[a_k]_k$ (respectively, $[a_k]_k$) denotes concatenation of the vectors $a_k$ (scalars $a_k$) to form a single column vector. Finally, $\frac{\partial \mathbf{y}}{\partial \mathbf{x}}$ to denotes the Jacobian matrix with (*i*, *j*)-th entry $\frac{\partial y_i}{\partial x_j}$.

## Image Classification using Local Descriptor Aggregators

Until recently, classical local descriptor aggregation methods like the BoW aggregator and the FV aggregator together with SVM classifiers were the reference in image classification. The classical image classification procedure consists of first mapping images to a fixed-dimensional image feature space where linear classifiers are computed using SVMs. The image feature construction process operates by aggregating the local descriptors extracted from the image in question, $\mathbf{x} : \left\{ \mathbf{s}_k \in \mathbb{R}^d \right\}_{k=1}^K \mapsto \mathbb{R}^D$, where the $s_k$ are the local descriptors of the image and K is the total number of local descriptors.

The Bag-of-Words (BoW) aggregator offers one such way to map local descriptors to image features. The BoW encoder offers an intuitive image feature and enjoys a low computational cost that can be important in user-in-the-loop applications. A training set of local descriptors $\mathcal{T}$ from a representative set of images is first used to build a codebook C = [$c_j$]$_j$ using *K*-means. Letting $C_j$ denote the Voronoi cell for codeword $c_j$, the BoW aggregated image feature is the relative frequency of occurrence of local descriptors in the Voronoi cells:

$$\mathbf{x}^B = \left[\# \left(\{\mathbf{s}_k, \mathbf{s}_k \in \mathcal{C}_j\}_k\right) / \# \left(\{\mathbf{s}_k\}_k\right)\right]_j, \qquad (1)$$

where # denote set cardinality, $\mathbf{x}^B$ is the feature vector for which each component j is described above, and $s_k$ is a local descriptor.

A more recent image feature, the Fisher vector, offers an important gain in image classification performance. The Fisher encoder requires that a training set of local descriptors $\mathcal{T}$ be used to learn a GMM model $\mathcal{G} = \{\beta_j, \boldsymbol{\Sigma}_j, \mathbf{c}_j\}_j$ with $j$-th mixture component having prior weight $\beta_j$, covariance matrix (assumed diagonal) $\Sigma_j$ and mean vector $c_j$. The first order Fisher vector for a given image can then be computed as follows:

$$\mathbf{x}^F = \left[\frac{1}{K}\sum_{k=1}^{K}\frac{p(j|\mathbf{s}_k)}{\sqrt{\beta_j}}\boldsymbol{\Sigma}_j^{-1}(\mathbf{s}_k - \mathbf{c}_j)\right]_j . \qquad (2)$$

where $K$ is the total number of local descriptors, $\mathbf{x}^F$ is the feature vector for which each component $j$ is described above, and $s_k$ is a local descriptor.

Both the BoW and Fisher aggregators are built from unsupervised models for the distribution of local descriptors, with supervision coming into play only at the classifier learning stage. Deep CNNs instead construct a fully supervised image-to-classification score pipeline.

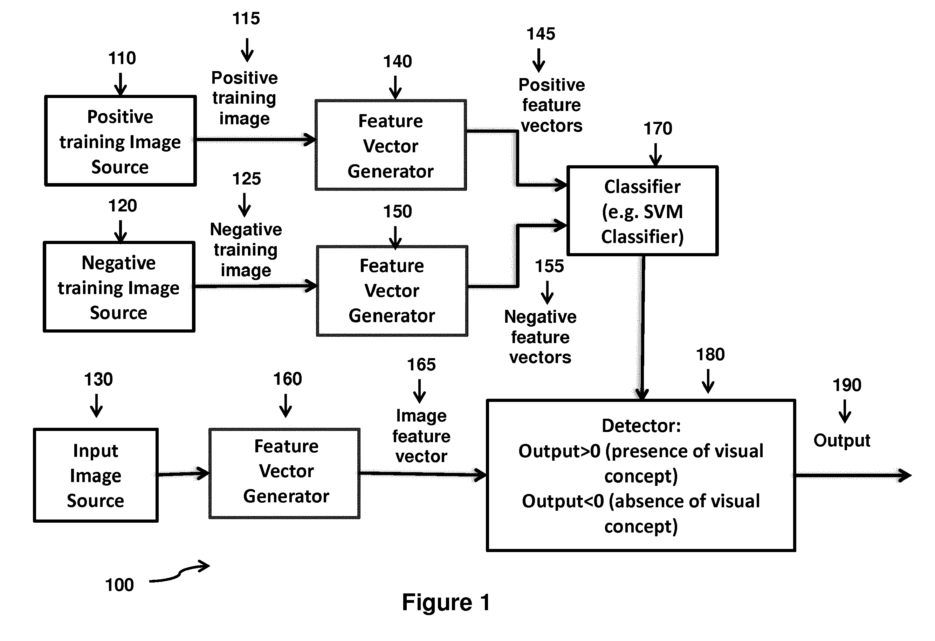

Figure 1 describes a simplified block diagram 100 of the basic pipeline for image classification. The image classification system aims to detect whether a specific visual concept is present in an image, for example, whether the image contains a car, bus, person, bottle or motorbike. In the diagram, the detection of a visual concept in an image is done by the classifier 170 at a detector 180, but the classifier has to be trained to perform the task of detecting a specific visual concept.

Consider the example of classifying input images from an input image source 130 containing (or not) the visual concept "cat". In order to train the classifier for the visual concept "cat", a set of images (the positive training images 115 from a positive training image source 110) containing a cat and a set of images (the negative training images 125 from a negative training image source 120) not containing a cat are used. Each image is represented by a single feature vector (145, 155, 165) created by feature vector generators (140, 150 and 160). The classifier 170 *(e.g.,* Support vector machine - SVM) is learned/trained using the feature vectors for the positive and negative images (145 and 155, respectively). The images are then classified according to the trained classifiers at the detector 180. For the example of a "cat", the SVM classifier output 190 is positive if the new unseen image is deemed to contain a cat or negative otherwise.

## Deep Convolution Neural Networks (DCNNs)

Deep Convolutional Neural Networks (DCNN) have established an overwhelming presence in image classification starting with the 2012 ImageNet Large Scale Visual Recognition Challenge (ILSVRC). The performance gap of DCNNs relative to the second entry in that year's competition (and relative to SIFT-based Fisher aggregation schemes) is in excess of 10 percentage points in absolute improvement of top-5 error rate.

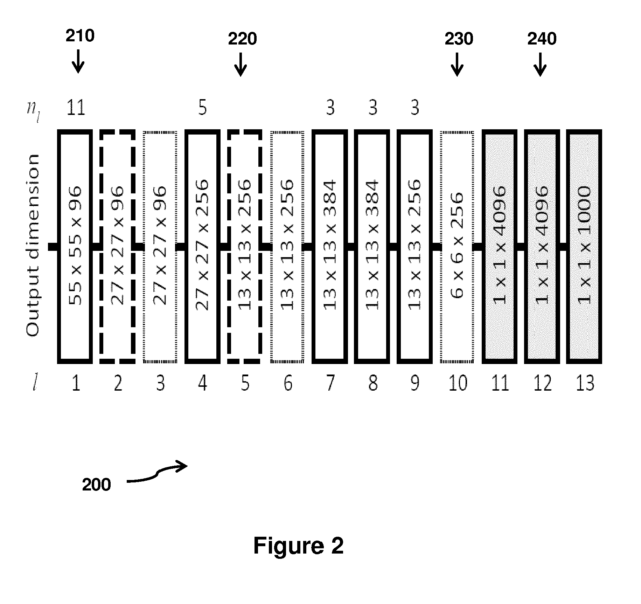

Figure 2 illustrates an exemplary architecture 200 of the DCNN processing pipeline trained on ImageNet 2012 and also utilized in the present principles. It consists of convolutional layers, max-pooling layers, normalization layers and fully connected layers. The various boxes are as follows: Dark-lined boxes 210: convolutional layers; dash-lined boxes 220: normalization layers; light-lined boxes 230: max-pooling layers; grayed-in boxes 240: fully-connected layers. At any given layer $l$, the layer's output data is an $R_l$ x $C_l \times K_l$ array

$$\left[\mathbf{x}_{ij}^l \in \mathbb{R}^{K_l}\right]_{i=1,\ldots,R_l;\, j=1,\ldots,C_l}, \qquad (3)$$

that is, the input to the next layer, with the input to layer $l$ = 1 being an RGB image of size $R_0 \times C_0$ and $K_0$ = 3 color channels.

In Figure 2, each layer, represented by a box, is labeled with the size $R_l \times C_l \times K_l$ of its output in equation (3). The $K_l$ kernels at layer $l$ have dimension $n_l \times n_l \times K_{l-1}$. The layer index $l$ (respectively, kernel spatial dimension $n_l$) is indicated below (above) the box for each layer. The input image is assumed normalized to size $224 \times 224 \times 3$, and $4\times$ down-sampling is applied during the first layer.

The convolutional layers ($l$ = 1, 4, 7 - 9) first compute the spatial convolution of the input with $K_l$ kernels of size

$n_l \times n_l \times K_{l-1}$ and then apply entry-wise Rectified Linear Units (ReLUs) max(0, $z$). The normalization layers ($l$ = 2, 5) normalize each $\mathbf{x} \in \{\mathbf{x}_{ij}^{l-1}\}_{ij}$ at the input using what can be seen as a generalization of the $l_2$ norm consisting of dividing each entry $x_m$ of $\times$ by $(2 + 10^{-4} \sum_{n \in \mathcal{I}_m} x_n^2)^{0.75}$. The summation indices $\mathcal{I}_m$ are taken to be the $m$-th sliding window over the indices of all entries. The max-pooling layers ($l$ = 3,6,10) carry out per-kernel spatial max-pooling by taking the maximum value from each spatial bin of size 3 $\times$ 3 spaced every 2 pixels.

The fully connected layers ($l$ = 11 - 13) can be seen as convolutional layers with kernels having the same size as the layer's input data. The last layer ($l$ = 13) uses a softmax non-linearity instead of the ReLU (Rectified Linear Unit) non-linearity used in other layers and acts as a multi-class classifier, having as many outputs as there are classes targeted by the system.

**Transfer learning using DCNNs**

The architecture in Figure 2 contains more than 60 million parameters and training it can be a daunting task requiring expensive hardware, large annotated training sets (ImageNet 2012 contains 15 million images and 22,000 classes) and training strategies including memory management schemes, data augmentation and specialized regularization methods. Moreover, extending the architecture to new classes would potentially require re-training the entire structure, as the full architecture is trained for a specific set of target classes.

To address this last difficulty, recent work proposed to use DCNN models pre-trained on the Imagenet dataset (consisting of many million images) and then transfer all but the last layer of this pre-trained DCNN to a new target dataset, where two new adaptation layers are trained. It.uses transfer learning to apply the architecture in Figure 2 to new classes while incurring reduced training overhead. Their approach consists of substituting only the last fully-connected classification layer by two trained adaptation layers, a fully-connected ReLU layer with 4096 neurons followed by a fully-connected softmax classification layer with as many neurons as target classes. The first 12 layers are transferred from the net in Figure 2 (learned/trained from ImageNet 2012 data), and only the new adaptation layers are trained using training data for the new set of target classes (*e.g.,* those of the Pascal VOC 2007 test bench).

While their approach reduces the training overhead and requires training set size, training the adaptation layers still requires non trivial complexity as these contain a large number of parameters (more than 16 million). To obtain an adequately large training set from Pascal VOC 2007 data, they derive a patch-based training set, labeling every patch according to its intersection with the provided object bounding boxes. Their approach thus operates on a per-patch classification basis, and the overall class score is obtained by summing these per-patch scores over the entire image for each class. This brings the important benefit of also providing the object localization, but it requires laborious bounding-box annotations on the training set and costly training of millions of parameters. The fact that the method works on a per-patch basis further increases the testing complexity relative to standard DCNNs.

**Proposed Technique**

As shown in Figure 1, prior art methods like BoW, FV or DCNN are used to obtain a feature vector representation of images which are then used to train the classifiers, *e.g.*, SVM. For SVM, this implies minimizing the loss function of the SVM objective function. However, one issue that arises with this strategy is that the feature vector representation obtained from any of these methods may not be the best feature for SVM classifiers. The present principles provide a technique for improving the performance of image classification systems when applied to any of the known methods such as DCNN, FV, BoW, among others, with a relatively small added complexity.

According to the present principles, a new approach to the image classification problem is described which consists of learning/training an adaptation architecture that is trained jointly with linear classifiers (*e.g.*, SVM). The adaptation architecture may be single (shallow) or multi-layered (deep). This adaptation method is agnostic to the type of input feature and applies either to features built using aggregators like BoW or FV, or to features obtained from the activations or outputs from DCNN layers. Learning an adaptation architecture jointly with SVM classifiers is a novel and simple approach, since previous methods that mix deep architectures and SVM classifiers use transferred architectures trained on a source dataset unrelated to the set of target classes and based on soft-max classifiers.

In the following, the problem is formally stated and the proposed adaptation structure and learning method are presented. Initially, a shallow architecture that uses a single adaptation layer is introduced, and subsequently generalized to a deep extension that employs multiple adaptation layers.

The present principles solve the problem of learning $K$ one-vs-all classifiers that, applied to a given image, indicate whether they visually represent the corresponding class. To this end, and without loss of generality, N training images with identifiers $i$ = 1,...,$N$ are assumed. Each image has a corresponding label $y_i^k \in \{-1, 1\}$, with $y_i^k = 1$ if the image belongs to class $k \in \{1,..., K\}$ and - 1 otherwise. It is further assumed that some feature encoding method can be applied so that a feature x can be computed from any given training or test image. Rather than using the features x directly, an encoding function f(x) is trained and linear classifiers are computed in the resulting feature space. The input features x can be any feature, including either FV, BoW, or features built from DCNN activations.

In one embodiment of the present principles, for the case of single-layer adaptation, the adapted feature is built from x using

$$\mathbf{f}(\mathbf{x}) = \mathbf{h}\left(\mathbf{M}\mathbf{x}_i + \mathbf{b}\right), \qquad (4)$$

where M and b define a transform (*e.g.*, affine). The non-linearity h is one of the standard non-linearities used in DCNNs, that is,

$$(Sigmoid) \quad \mathbf{h}(\mathbf{p}) = \left[\frac{1}{1 + e^{-p_j}}\right]_j, \qquad (5)$$

$$(ReLU) \quad \mathbf{h}(\mathbf{p}) = \left[\max\left(0, p_j\right)\right]_j, \text{ or} \qquad (6)$$

$$(Soft - max) \quad \mathbf{h}(\mathbf{p}) = \left[\frac{e^{p_j}}{\sum_j e^{p_j}}\right]_j. \qquad (7)$$

where each non-linear function **h** is a vector for which each component *j* corresponds to function h applied to each component $p_j$ of vector **p** as described in the equations above.

The optimization proposes to learn both M and b along with the classifiers $w_k, k=1,...,K$ is

$$\underset{\mathbf{M},\mathbf{b},\mathbf{w}^1,\cdots,w^K}{\mathrm{argmin}} \sum_{k=1}^{K}\left|\mathbf{w}^k\right|^2 + \frac{C_1}{N}\sum_{i=1}^{N}\ell\left(y_i^k \, \mathbf{h}(\mathbf{M}\mathbf{x}_i + \mathbf{b})^T\mathbf{w}^k\right) \qquad (8a)$$

where N is the number of training images; *K* is the number of classes; $\ell(c) = \max(0, 1 - c)$ is the hinge loss and $C_1$ is a scalar.

In another embodiment, the optimization includes a regularizing penalty term $\eta$ (M), that can be the Frobenius norm, the 1-2,1 norm or the trace norm (also known as nuclear norm) of **M.** The resulting optimization is

$$\underset{\mathbf{M},\mathbf{b},\mathbf{w}^1,\cdots,w^K}{\mathrm{argmin}} \sum_{k=1}^{K}\left|\mathbf{w}^k\right|^2 + \frac{C_1}{N}\sum_{i=1}^{N}\ell\left(y_i^k \, \mathbf{h}(\mathbf{M}\mathbf{x}_i + \mathbf{b})^T\mathbf{w}^k\right) + \lambda\eta(\mathbf{M}) \qquad (8b)$$

where λ is a scalar. For the case when the 1-2,1 norm is used, the solution can be obtained, for example, by letting M=P-Q, where P and Q are constrained to be non-negative matrices updated using stochastic gradient descent.

In order to limit the degrees of freedom of the adaptation model M, b, one can constrain the matrix M by forcing some components to be zero to reduce the number of free elements that need to be learned (by regularization). This is particularly important if the training set available for the target classes is small. One approach consists of forcing M to be block-diagonal and constituted of non-overlapping blocks $M_l$ corresponding each to one sub-vector $x_l$ of the input feature x (accordingly, b is split into sub-vectors $b_l$ such that b = $[b_l]_l$).

$$\underset{\{\mathbf{M}_l\}_l,\{\mathbf{b}_l\}_l,\{\mathbf{w}^k\}_k}{\mathrm{argmin}} \sum_{k=1}^{K}\left|\mathbf{w}^k\right|^2 + \frac{C_1}{N}\sum_{i=1}^{N}\ell\left(y_i^k \, \mathbf{h}\left(\left[\mathbf{M}_l\mathbf{x}_{i,l} + \mathbf{b}_l\right]_l\right)^T\mathbf{w}^k\right) \qquad (9a)$$

where, without loss of generality, the input **x** can be permutated. Equation (9a) therefore corresponds to a regularized version of equation (8a).

In another variant of the above optimization, the position of the coefficients of **M** that are constrained to be zero can be learned as part of the optimization process by using the factorization **M=AD,** where **A** and **D** are square matrices of the same size as **M,** and **D** is constrained to be a diagonal matrix with a sparse diagonal enforced by a sparsity inducing norm such as the L-1 norm given by the sum of absolute values of the diagonal coefficients. The optimization in this case proposes to learn both **A,D** and **b** along with the classifiers using the following equation (10):

$$\underset{\mathbf{A},\mathbf{D},\mathbf{b},\mathbf{w}^1,\cdots,w^K}{\operatorname{argmin}} \sum_{k=1}^{K} \left|\mathbf{w}^k\right|^2 + \frac{C_1}{N} \sum_{i=1}^{N} \ell\left(y_i^k\, \mathbf{h}(\mathbf{A}\mathbf{D}\mathbf{x}_i + \mathbf{b})^T \mathbf{w}^k\right) + \gamma v(\mathbf{D}) \quad (9b)$$

where $v(\mathbf{D}) = \sum_i |D_{ii}|$ and $\gamma$ is a user-selected coefficient that regulates how sparse the diagonal matrix D is. One can also envision adding a weighted regularizing penalty term $\lambda\eta(\mathbf{A})$ to equation (9b) so as to constrain, for example, the Frobenius norm or the trace norm (also known as nuclear norm) of **A.**

In another embodiment of the present principles, this single layer approach in (8a) can be extended to obtain a multi-layered variant by letting:

$$f_j(\mathbf{x}) = h\left(\mathbf{M}^j \mathbf{x} + \mathbf{b}^j\right) \qquad (10)$$

Assuming an architecture with J layers, the resulting learning objective is:

$$\underset{\mathbf{M}^1,\mathbf{b}^1,\cdots,\mathbf{M}^J,\mathbf{b}^J,\mathbf{w}^1,\cdots,\mathbf{w}^K}{\operatorname{argmin}} \sum_{k=1}^{K} \left|\mathbf{w}^k\right|_2^2 + \frac{C_1}{N} \sum_{i=1}^{N} \ell\left(y_i^k\left(f_J^\circ, \cdots, {}^\circ f_1(\mathbf{x})\right)^T \mathbf{w}^k\right) \quad (11a)$$

where $J$ is the number of multi-layers of the adaptive architecture; $1 \leq k \leq K$, where $K$ is the number of classes; $1 \leq i \leq N$, where $N$ is the number of training images; x are the feature vectors; $\mathbf{w}^K, k = 1, \cdots, K$ are the input image classifiers; $y_i^k \in \{-1, 1\}$ are image labels; $f_j(\mathbf{x}) = h(\mathbf{M}^j\mathbf{x}+b^j)$ represent the multi-layers of the adaptive architecture; all $\mathbf{M}^j$ and $b^j$ represent the transform applied to the feature vector x; $\ell(c) = \max(0, 1 - c)$ is the hinge loss and $C_1$ is a scalar.

When using a regularizing penalty term on **M,** the resulting learning objective for the multi-layer approach is:

$$\underset{\mathbf{M}^1,\mathbf{b}^1,\cdots,\mathbf{M}^J,\mathbf{b}^J,\mathbf{w}^1,\cdots,\mathbf{w}^K}{\operatorname{argmin}} \sum_{k=1}^{K} \left|\mathbf{w}^k\right|_2^2 + \frac{C_1}{N} \sum_{i=1}^{N} \ell\left(y_i^k\left(f_J^\circ, \cdots, {}^\circ f_1(\mathbf{x})\right)^T \mathbf{w}^k\right) + \sum_j \lambda_j \eta(\mathbf{M}_j)$$

$$(11b)$$

where $\lambda_1,..., \lambda_J$ are user-selected coefficients.

When constraining **M=AD** and using a regularizing penalty term on **D,** the resulting learning objective for the multi-layer approach is:

$$\underset{\mathbf{A}^1,\mathbf{D}^1,\mathbf{b}^1,\cdots,\mathbf{A}^J,\mathbf{D}^J,\mathbf{b}^J,\mathbf{w}^1,\cdots,\mathbf{w}^K}{\operatorname{argmin}} \sum_{k=1}^{K} \left|\mathbf{w}^k\right|_2^2 + \frac{C_1}{N} \sum_{i=1}^{N} \ell\left(y_i^k\left(f_J^\circ, \cdots, {}^\circ f_1(\mathbf{x})\right)^T \mathbf{w}^k\right) + \sum_j \gamma_j v(\mathbf{D}_j)$$

$$(11c)$$

where $\gamma_1,..., \gamma_J$ are user-selected coefficients, and **M$^j$=A$^j$D$^j$.**

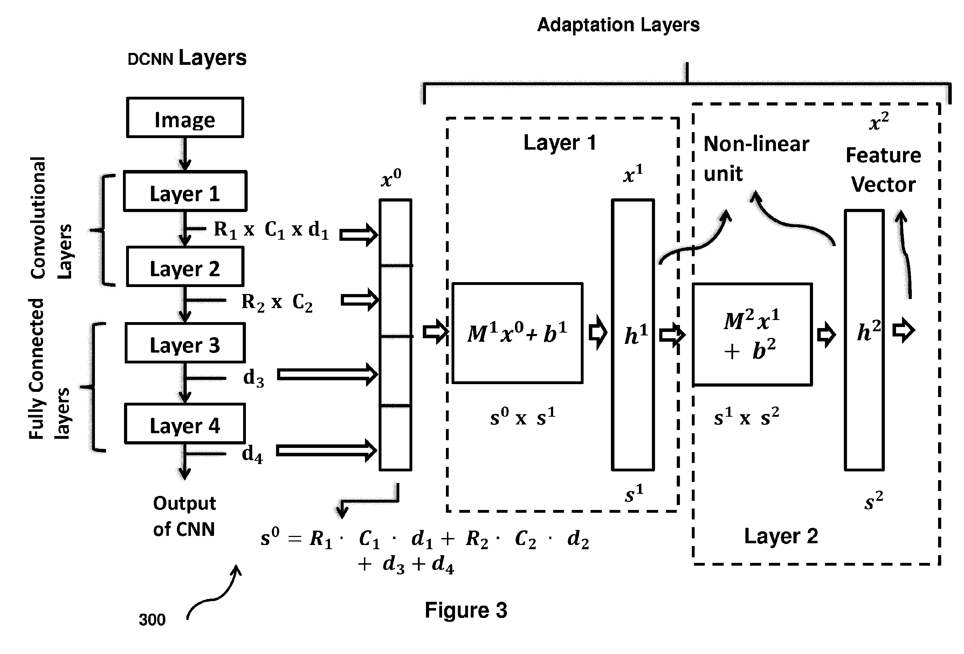

Figure 3 illustrates an exemplary embodiment of a simplified block diagram or architecture 300 for a deep (2-layer) adaptation method according to the present principles applied to a DCNN network as in equation (11a). The DCNN pipeline illustrated in Figure 1 has many layers. For ease of explanation, Figure 3 exemplifies only 4 layers ($l = 1 - 4$). The adaptation architecture has two horizontal layers. Figure 3 also applies to equations (11b) and (11c), when the matrices **M$^j$** are constrained to have the form **M$^j$=A$^j$D$^j$** and the **D$^j$** are diagonal matrices that are sparse.

An image is given as input to the DCNN. The output of each layer ($l = 1 - 4$) is concatenated to form one large feature vector $x^0$ ($x^j$ in equation 13 below). The superscript associated with the variables indicates the horizontal adaptation layer it belongs to. In the diagram, s represents the number of coefficients in the given block. For example, $s_0$ represents the number of coefficients in $x^1$. In the case of block matrix M$^1$, $s_0$ is number of input coefficients and $s_1$ is number of output coefficients. Blocks represented by **h** (equation 5) are the non-linear operators on the input data.

In yet another embodiment of the present principles, a multi-layer, block-diagonal constrained architecture is described. Similarly to (9a), one can constrain the matrices $M^j$ to be block-diagonal and composed of sub-matrices $\mathrm{M}_l^j$ when learning the deep architecture defined by (11a-c). The size of the matrices $M^j$, $l$ can vary from one layer to the other so as to incorporate dependencies between different sub-vectors from previous layers.

This can be formalized by defining $\mathbf{x}_0 \triangleq \mathbf{x}$. Then the input to the j-th layer can be denoted as $x^{j-1}$, and the output of the *j*-th layer is given by:

$$\mathbf{x}^j = f_j \circ \ldots \circ f_1(\mathbf{x}). \qquad (12)$$

where the operator "o" is a composition operator such that $(f \circ g)(x)=f(g(x))$.

Accordingly, the number $n_j$ of sub-vectors $\mathbf{x}_l^j$ that $x^j$ is divided into can vary from layer to layer,

$$\mathbf{x}^j = [\mathbf{x}_l^j]_{l=1}^{n_j}. \qquad (13)$$

Hence the corresponding $\mathrm{M}_l^j$ and $\mathbf{b}_l^j$ can process multiple sub-vectors $\mathbf{x}_k^{j-1}$ from the previous layer.

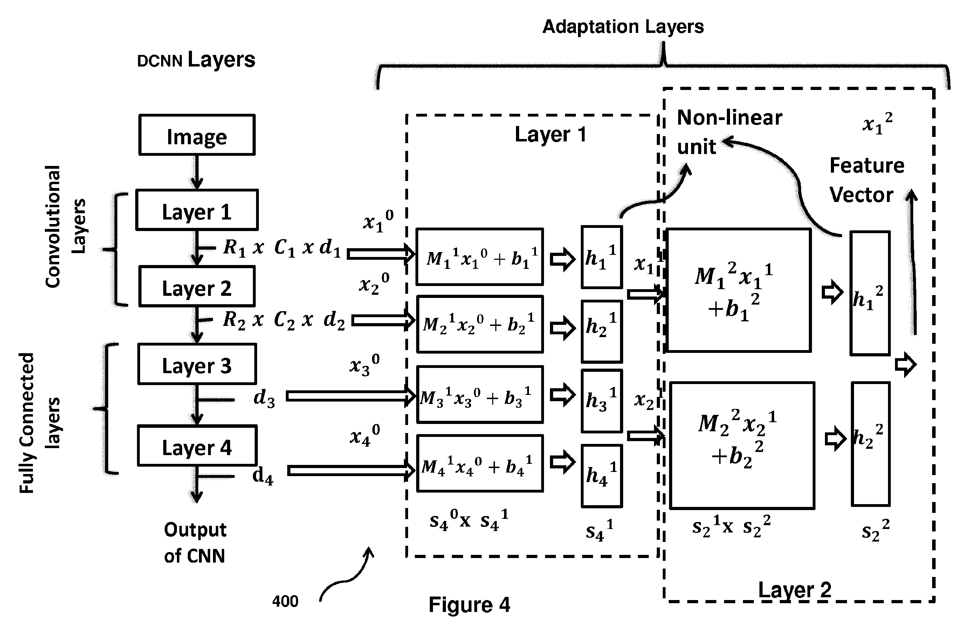

Figure 4 illustrates a simplified block diagram of deep adaptation of each layer in transferred DCNNs according to the present principles. In this diagram the block matrix $M^j$ from Figure 3 is split into block matrices $\mathrm{M}_l^j$ per layer *l*. The training of the block matrix $\mathrm{M}_l^j$ per layer *l* is performed using the sub-feature $\mathbf{x}_l^j$ obtained from DCNNs (equation 9). Figure 4 therefore corresponds to the regularized version of equation (11a), wherein each block in the block-diagonal matrix is associated to one layer of the DCNN network. In Figure 4, Layer 1, there are four block-diagonal matrices $M^1{}_j$, j=1,2,3,4 for layer l=1, and two block-diagonal matrices $M^2{}_j$, j=1,2, for layer l=2.

According to one embodiment of the present principles, the generation of the image classifiers can be summarized as: i) Receiving a training dataset and obtaining their standard feature vectors x (which could be Bow, FV ...) for each image, or alternatively, receiving standard feature vectors for the training dataset; ii) Transforming the standard feature vectors for each training image feature vector x with a general transform (*e.g.*, affine) characterized by M and b; iii) Minimizing one of the equations (8a-b), (9a-b) or (11a-c), depending on the architecture to find the optimum w*, M* and b* for this dataset, where w* are optimum classifiers, and M* and b* are the optimum transform.

According to one embodiment of the present principles, the image classification subsequent to the training/minimization can be summarized as: i) Receiving an image and obtaining a standard feature vector x, or alternatively, receiving a standard feature vector for an image; ii) Transforming the standard feature vector x according to the optimum transform (M* and b*) found in the minimization/training to obtain a transformed feature vector x*; iii) Applying the optimum set of classifiers (w* ) to the transformed feature vector x* to classify the image (decide the type of image).

## Results

The present principles proposes a technique to jointly learn linear *(e.g.,* SVM) classifiers together with a deep image feature adaptation structure. The deep adaptation structure consists of a sequence of operations (e.g., affine transform) and element-wise rectification operations and can be learned on top of any input feature. Tests for the proposed method using various standard image features, including the state-of-the-art DCNN activation features show that it can provide an improvement over the prior art. Existing DCNN-based feature adaptation methods learn the adaptation structure using a soft-max classifier and then use the activations of the previous-to-last layer as a feature to learn linear SVM classifiers. This is unlike the technique of the present principles, which jointly learns the adaptation structure and the linear classifiers on the target dataset as part of the adaptation process.

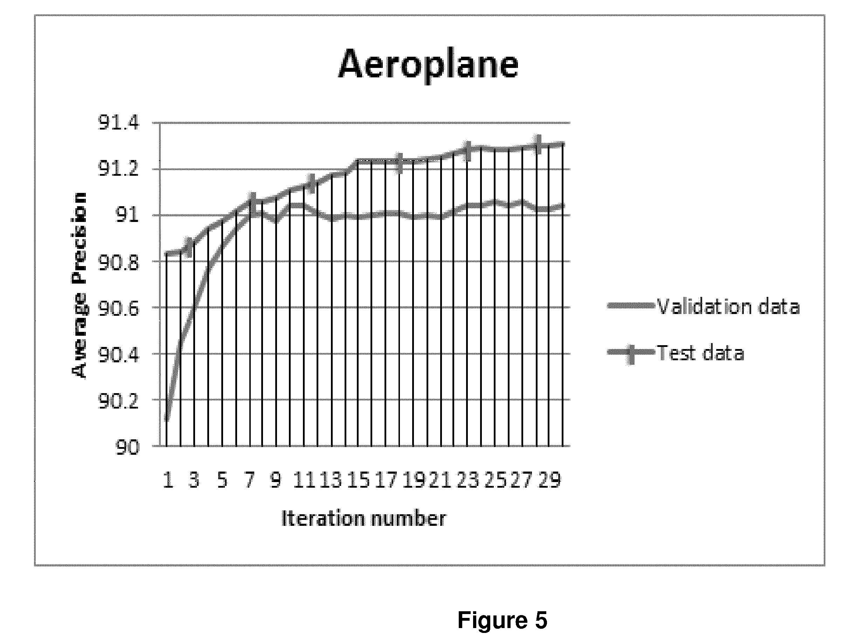

Figure 5 shows simulation results of the average precision for the Pascal VOC 2007 dataset (associated with the Pascal Visual Object Classes Challenge 2007) and particularly, the "aeroplane" class, when applying an exemplary image classification system according to the present principles (FAIC - Feature-Adapted Image Classification). The Pascal VOC 2007 dataset consists of 9163 images representing 20 visual categories or classes and is split into training, validation and test sets. The training dataset consists of a set of labelled images. These labels are based on the visual content present in an image and are utilized to train the image classifiers. In Figure 5, a single layer adaptive architecture was used over DCNN and equation (8a) was minimized according to the training dataset.

In Figure 5, the minimization in equation (8a) was performed using a standard Stochastic Gradient Descent (SGD) algorithm, which is a well-known gradient descent optimization method for minimizing an objective function that is written as a sum of differentiable functions. In the SGD algorithm, as the algorithm sweeps through the training dataset, it performs an update for each training example. Several passes can be made over the training dataset until the algorithm converges. The algorithm finds the gradient of equation (8a) with respect to parameters w, M and b. Then it updates these parameters using a block-coordinate stochastic gradient descent step (iteration).

Once training was accomplished and the parameters of the objective function were obtained, that is, the optimum classifiers **w\***, **M\*** and **b\***, these optimum parameters were utilized to classify images from the test dataset. Figure 5 plots the Average Precision versus Iteration number of the SGD algorithm, wherein Precision is a standard measure for evaluating the performance of a retrieval or classification system.

For a classifier applied to all N images in a benchmark testing set (for which the class memberships are known), the images are ranked according to their classification score $w^T x$, where x is the feature vector (*e.g.*, the learned adapted features of the present principles) and w is a classifier (*e.g.*, SVM) for the class in question. *Ground-Truth Positives (GTP)* denotes the total number of images in the benchmark that belong to the class in question. Given the first n (for n=1,....,N) ranked images, True positives at n (TPN) denotes the number of images which are positive, of which there are at most minimum(n, GTP). Therefore, for all $n \leq N$, $TPN \leq GTP$. Precision and recall are defined as follows:

$$\text{Recall (n)} = \#(\text{of true positives at n}) \: / \: \text{GTP} \qquad (14)$$

$$\text{Precision (n)} = \#(\text{of true positives at n}) \: / \: \text{n} \qquad (15)$$

By varying n, a curve is obtained corresponding to the specific class being evaluated (*e.g.*, "aeroplane"), and the Average Precision (AP) is the area under this curve, which is at most 1.

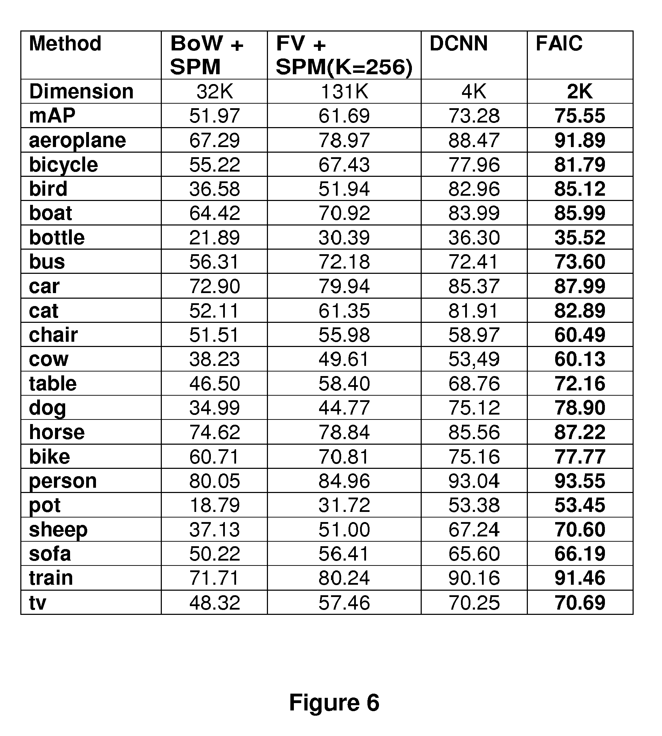

Figure 6 shows a table of Average Precision (AP) simulation results for the 20 classes of the Pascal VOC dataset, for the exemplary classification system according to the present principles (FAIC - Feature-Adapted Image Classification), the DCNN system, a BoW based system and an FV based system. As it is evident from the simulation results, the exemplary FAIC system has better performance for all the classes analyzed, representing an improvement over the state of the art. Results are also shown for mean Average Precision (mAP) over all classes, for which FAIC also outperforms the prior art.

For the BoW based simulations, images were represented with bag-of-features histograms. Densely sampled gray scale SIFT descriptors were extracted at 4 scales with step size of 3 pixels. The VLfeat library was used for extracting SIFT features. A visual codebook of size 4,000 was learned using randomly sampled SIFT features from the Pascal VOC 2007 training and validation dataset. Neearest neighbor based hard assignment of SIFT features to codebook vectors were used. Finally, three level spatial pyramid was used, by dividing the image into 1x1, 3x1 and 2x2 spatial grid.

For the FV based simulations, GMM with K=256 was used to compute the Fisher vector representation for the images. First, the GMM models were trained using the Maximum likelihood (ML) criterion. This is done by minimizing the Euclidean distance between mean of GMM with the SIFT descriptors extracted from training and validation images from the Pascal VOC 2007 dataset. Second, Fisher vector representation for each image was computed using first order differences of GMM models with the SIFT descriptors extracted from an image. Finally, three level spatial pyramid was used similar to one used for the BoW based simulations.

CNN based models consistently outperform the shallow encodings such as FV and BoW, by large ~ 10 % margin. For the simulations, the image features were represented using the last hidden layer (fp7) in DCNN. These image features have the dimentionality of 4096 - *D.* The pre-trained models of DCNN are available in standard VLfeat library. These models differ on the basis of underlining DCNN architectures used for training. The chosen model performs significantly better and fast, and the FAIC system of the present principles was validated against it.

In this experimental setup, adapted feature for an image *x* is obtained using equation (10). The matrix $M_l$ in equation (4) is constrained to a low rank matrix. The *ReLU* function in equation (5) is used to compute the non-linearity. Given the objective function defined by equation (11a), a gradient descent based learning algorithm is used for optimization. Stochastic Gradient Descent (SGD) is one such well known gradient descent algorithm, used to optimize equation (11a). The SVM parameters w and M, b are treated as the sets of variables on which to perform block-coordinate gradient descent iterations.

Regarding complexity, the following points can be made about the FAIC technique of the present principles: i) It does not use bounding box annotations to extend the dataset as some of the prior art, which simplifies the training complexity; ii) The pipeline is applied on the full image instead of on a patch-by-patch basis, which simplifies testing (classification) complexity; iii) It does not use softmax (unlike DCNN), which simplifies the task of learning/training the classifiers, since softmax works for multi-classes. If one intends to add a new class in softmax, one must re-learn all the classes, as opposed to SVM, which one can learn for a single class at a time; iv) Regularization is applied according to equation (9a) to further reduce the complexity.

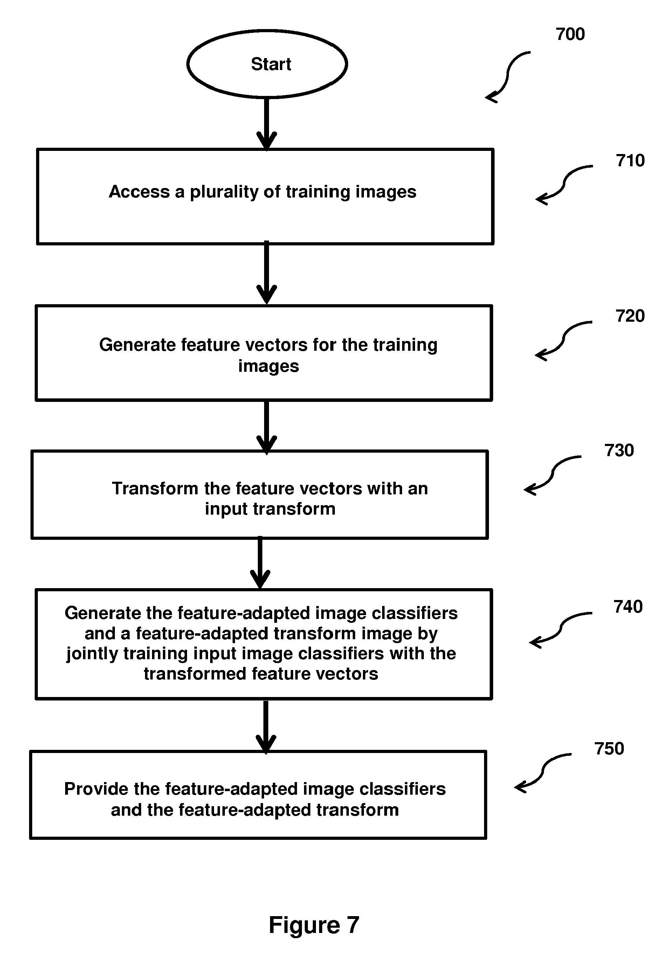

Figure 7 shows a flowchart 700 of a method of generating feature-adapted image classifiers for classifying images according to the present principles. The method includes: accessing a plurality of training images 710: generating feature vectors 720 for the training images; transforming the feature vectors 730 with an input transform; generating the feature-adapted image classifiers and a feature-adapted transform 740 as a function of the transformed feature vectors and input image classifiers by jointly training the input image classifiers with the transformed feature vectors; and providing the feature-adapted image classifiers and the feature-adapted transform 750.

In addition, the step of transforming may include: affine transforming the feature vectors. The step of transforming may further include: applying a nonlinear function to the affine transform. The step of generating may include: decreasing a function of the input image classifiers under a constraint, wherein the constraint is a function of the transformed feature vectors. The decreasing step may include a minimization satisfying any of equations (8a-b), (9a-b) and (11a-c). The matrix M can be a block diagonal matrix. The feature vectors may be one of supervised and unsupervised feature vectors. The classifiers may be SVM classifiers.

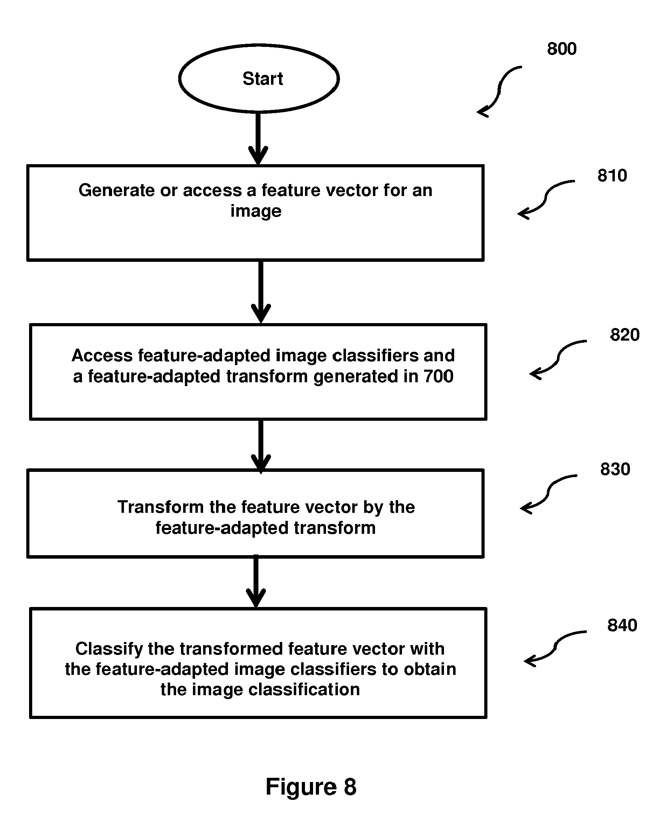

Figure 8 shows a flowchart 800 of a method of image classification according to the present principles. The method includes: generating or accessing a feature vector 810 for an image; accessing feature-adapted image classifiers and a feature-adapted transform 820 generated as in the flowchart of Figure 7; transforming the feature vector 830 by the feature-adapted transform; and classifying the transformed feature vector 840 with the feature-adapted image classifiers to obtain the image classification.

It is to be understood that the present principles may be implemented in various forms of hardware, software, firmware, special purpose processors, or a combination thereof. Preferably, the present principles are implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

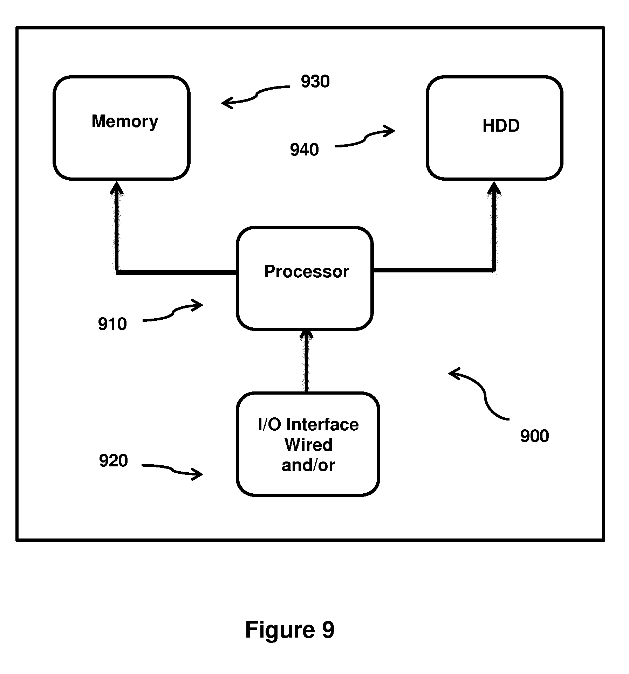

Figure 9 shows a block diagram of a minimum computing environment 900 within which the present principles can be implemented and executed. The computing environment 900 includes a processor 902, and at least one (and preferably more than one) I/O interface 904. The I/O interface can be wired or wireless and, in the wireless implementation is pre-configured with the appropriate wireless communication protocols to allow the computing environment 900 to operate on a global network (e.g., internet) and communicate with other computers or servers (e.g., cloud based computing or storage servers) so as to enable the present principles to be provided, for example, as a Software as a Service (SAAS) feature remotely provided to end users. One or more memories 906 and/or storage devices (HDD) 908 are also provided within the computing environment 900. The computing environment may be used to implement a node or device, and/or a controller or server who operates the storage system.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles is not limited to those precise embodiments, and that various changes and modifications may be effected therein by one of ordinary skill in the pertinent art without departing from the scope of the present principles. All such changes and modifications are intended to be included within the scope of the present principles as set forth in the appended claims.

**Claims**

1. A method of generating feature-adapted image classifiers for classifying images comprising:

   accessing (710) a plurality of training images;
   generating (720) feature vectors for said training images;
   transforming (730) said feature vectors with an input transform;

generating (740) said feature-adapted image classifiers and a feature adapted transform as a function of said transformed feature vectors and input image classifiers by jointly training said input image classifiers with said transformed feature vectors; and

providing (750) said feature-adapted image classifiers and said feature-adapted transform.

2. The method of claim 1 wherein the step of transforming comprises:

   affine transforming said feature vectors.

3. The method of claim 2 wherein said step of transforming further comprises:

   applying a nonlinear function to said affine transfom.

4. The method of any of claims 1-3 wherein the step of generating said feature-adapted image classifiers comprises:

   decreasing a function of said input image classifiers under a constraint, wherein said constraint is a function of said transformed feature vectors.

5. The method of claim 4 wherein said decreasing step comprises a minimization of the type:

$$\underset{\mathbf{M}^1,\mathbf{b}^1,\cdots,\mathbf{M}^J,\mathbf{b}^J,\mathbf{w}^1,\cdots,\mathbf{w}^K}{\mathrm{argmin}} \sum_{k=1}^{K} \left|\mathbf{w}^k\right|_2^2 + \frac{C_1}{N} \sum_{i=1}^{N} \ell\left(y_i^k \big(f_J \circ, \quad \cdots, \circ f_1(\mathbf{x})\big)^T \mathbf{w}^k\right)$$

where J is the number of multi-layers of the adaptive architecture; $1 \le k \le K$, where K is the number of classes; $1 \le i \le N$, where $N$ is the number of training images; x are the feature vectors; $\mathbf{w}^K, k = 1, \cdots, K$ are the input image classifiers; $y_i^k \in \{-1, 1\}$ are image labels; $f_j(x) = h(M^j x + b^j)$ represent the multi-layers of the adaptive architecture; all $M^j$ and $b^j$ represent the input transform; $\ell(c) = \max(0, 1 - c)$ is the hinge loss and $C_1$ is a scalar.

6. The method of claim 4 wherein said decreasing step comprises a minimization of the type:

$$\underset{\mathbf{M}^1,\mathbf{b}^1,\cdots,\mathbf{M}^J,\mathbf{b}^J,\mathbf{w}^1,\cdots,\mathbf{w}^K}{\mathrm{argmin}} \sum_{k=1}^{K} \left|\mathbf{w}^k\right|_2^2 + \frac{C_1}{N} \sum_{i=1}^{N} \ell\left(y_i^k \big(f_J \circ, \quad \cdots, \circ f_1(\mathbf{x})\big)^T \mathbf{w}^k\right)$$
$$+ \sum_{j} \lambda_j \eta\big(\mathbf{M}_j\big)$$

where J is the number of multi-layers of the adaptive architecture; $1 \le k \le K$, where K is the number of classes; $1 \le i \le N$, where $N$ is the number of training images; x are the feature vectors; $\mathbf{w}^K, k = 1, \cdots, K$ are the input image classifiers; $y_i^k \in \{-1, 1\}$ are image labels; $f_j(x) = h(M^j x + b^j)$ represent the multi-layers of the adaptive architecture; all $M^j$ and $b^j$ represent the input transform; $\ell(c) = \max(0, 1 - c)$ is the hinge loss and $C_1$ is a scalar, where $\eta(M)$ is a regularizing penalty term, and where $\lambda_1,..., \lambda_J$ are scalars.

7. The method of claim 4 wherein said decreasing step comprises a minimization of the type:

$$\underset{\mathbf{A}^1,\mathbf{D}^1,\mathbf{b}^1,\cdots,\mathbf{A}^J,\mathbf{D}^J,\mathbf{b}^J,\mathbf{w}^1,\cdots,\mathbf{w}^K}{\operatorname{argmin}} \sum_{k=1}^{K} \left|\mathbf{w}^k\right|_2^2 + \frac{C_1}{N} \sum_{i=1}^{N} \ell\left(y_i^k \left(f_J \circ \quad \cdots, \circ f_1(\mathbf{x})\right)^T \mathbf{w}^k\right)$$

$$+ \sum_j \gamma_j v\left(\mathbf{D}_j\right)$$

where J is the number of multi-layers of the adaptive architecture; $1 \le k \le K$, where K is the number of classes; $1 \le i \le N$, where $N$ is the number of training images; x are the feature vectors; $\mathbf{w}^K, k = 1, \cdots, K$ are the input image classifiers; $y_i^k \in \{-1, 1\}$ are image labels; $f_j(\mathbf{x}) = h(M^j\mathbf{x} + b^j)$ represent the multi-layers of the adaptive architecture; all $M^j$ and $b^j$ represent the input transform; $\ell(c) = \max(0, 1 - c)$ is the hinge loss and $C_1$ is a scalar, where $v(\mathbf{D}) = \sum_i |D_{ii}|$ and $\gamma_1,...,\gamma_J$ are user-selected coefficients that regulates how sparse the diagonal matrix D is.

8. The method of claim 5 or 6 wherein M is a block diagonal matrix.

9. The method of claim 5 or 6 wherein $M_j$ is a low-rank matrix, or a matrix constrained to have low Frobenius norm.

10. The method according to any of the claims 5 to 7 wherein $M_j$ has the form $M_j = \mathbf{A_j}\mathbf{D_j}$, where $\mathbf{A_j}$ and $\mathbf{D_j}$ are square matrices and $\mathbf{D_j}$ is a diagonal matrix with sparse diagonal.

11. The method of claim 10 wherein $\mathbf{A_j}$ is a low rank matrix, or a matrix constrained to have low Frobenius norm.

12. The method according to any of the claims 1 to 11 wherein said classifiers are SVM classifiers.

13. An apparatus for generating feature-adapted image classifiers for classifying images, said apparatus comprising a processor, for receiving at least one input/output; and at least one memory in signal communication with said processor, said processor being configured to implement the method according to any of the claims 1 to 12.

14. A method of image classification comprising:

generating or accessing (810) a feature vector for an image;
accessing (820) feature-adapted image classifiers and a feature-adapted transform generated according to any of the claims 1 to 13;
transforming (830) said feature vector by said feature-adapted transform; and
classifying (840) said transformed feature vector with said feature-adapted image classifiers to obtain said image classification.

15. An apparatus for image classification comprising a processor, for receiving at least one input/output; and at least one memory in signal communication with said processor, said processor being configured to:

generate or access a feature vector for an image;
access feature-adapted image classifiers and a feature-adapted transform generated according to any of the claims 1-13;
transform said feature vector by said feature adapted transform; and
classify said transformed feature vector with said feature-adapted image classifiers to obtain said image classification.

Figure 1

EP 3 029 606 A2

210            220                      230    240

$n_l$   11          5           3   3   3

Output dimension

$55 \times 55 \times 96$ | $27 \times 27 \times 96$ | $27 \times 27 \times 96$ | $27 \times 27 \times 256$ | $13 \times 13 \times 256$ | $13 \times 13 \times 256$ | $13 \times 13 \times 384$ | $13 \times 13 \times 384$ | $13 \times 13 \times 256$ | $6 \times 6 \times 256$ | $1 \times 1 \times 4096$ | $1 \times 1 \times 4096$ | $1 \times 1 \times 1000$

$l$   1   2   3   4   5   6   7   8   9   10   11   12   13

200

**Figure 2**

Figure 3

EP 3 029 606 A2

Figure 4

400

Figure 5

EP 3 029 606 A2

| Method | BoW + SPM | FV + SPM(K=256) | DCNN | FAIC |
|---|---|---|---|---|
| Dimension | 32K | 131K | 4K | **2K** |
| mAP | 51.97 | 61.69 | 73.28 | **75.55** |
| aeroplane | 67.29 | 78.97 | 88.47 | **91.89** |
| bicycle | 55.22 | 67.43 | 77.96 | **81.79** |
| bird | 36.58 | 51.94 | 82.96 | **85.12** |
| boat | 64.42 | 70.92 | 83.99 | **85.99** |
| bottle | 21.89 | 30.39 | 36.30 | **35.52** |
| bus | 56.31 | 72.18 | 72.41 | **73.60** |
| car | 72.90 | 79.94 | 85.37 | **87.99** |
| cat | 52.11 | 61.35 | 81.91 | **82.89** |
| chair | 51.51 | 55.98 | 58.97 | **60.49** |
| cow | 38.23 | 49.61 | 53,49 | **60.13** |
| table | 46.50 | 58.40 | 68.76 | **72.16** |
| dog | 34.99 | 44.77 | 75.12 | **78.90** |
| horse | 74.62 | 78.84 | 85.56 | **87.22** |
| bike | 60.71 | 70.81 | 75.16 | **77.77** |
| person | 80.05 | 84.96 | 93.04 | **93.55** |
| pot | 18.79 | 31.72 | 53.38 | **53.45** |
| sheep | 37.13 | 51.00 | 67.24 | **70.60** |
| sofa | 50.22 | 56.41 | 65.60 | **66.19** |
| train | 71.71 | 80.24 | 90.16 | **91.46** |
| tv | 48.32 | 57.46 | 70.25 | **70.69** |

## Figure 6

700

**Start**

710

Access a plurality of training images

720

Generate feature vectors for the training images

730

Transform the feature vectors with an input transform

740

Generate the feature-adapted image classifiers and a feature-adapted transform image by jointly training input image classifiers with the transformed feature vectors

750

Provide the feature-adapted image classifiers and the feature-adapted transform

**Figure 7**

800

Start

810

Generate or access a feature vector for an
image

820

Access feature-adapted image classifiers and
a feature-adapted transform generated in 700

830

Transform the feature vector by the
feature-adapted transform

840

Classify the transformed feature vector with
the feature-adapted image classifiers to obtain
the image classification

Figure 8

**Figure 9**